# EUROPEAN PATENT APPLICATION

(11) **EP 4 439 257 A1**
(43) Date of publication of application: **02.10.2024**
(21) Application number: 23742685.3
(22) Date of filing: 04.01.2023
(51) Int. Cl.: G06F 3/041

(54) **SUPPORTING LAYER GROUP USED ON ELECTRONIC DEVICE, DISPLAY MODULE, AND ELECTRONIC DEVICE**

(30) Priority: 24.01.2022 CN 202220192730 U
(71) Applicant: Huawei Technologies Co., Ltd., Shenzhen, Guangdong 518129 (CN)
(72) Inventor: DAI, Xiaotao, Shenzhen, Guangdong 518129 (CN); LUO, Zhongyuan, Shenzhen, Guangdong 518129 (CN); YAN, Hongkang, Shenzhen, Guangdong 518129 (CN); PU, Chunlang, Shenzhen, Guangdong 518129 (CN); WANG, Jiaren, Shenzhen, Guangdong 518129 (CN); LIANG, Yanfeng, Shenzhen, Guangdong 518129 (CN); LIN, Hongfan, Shenzhen, Guangdong 518129 (CN); LV, Ren, Shenzhen, Guangdong 518129 (CN)
(74) Representative: Körber, Martin Hans
(86) International application number: PCT/CN2023/070369
(87) International publication number: WO 2023/138369

(57) **Abstract**

A supporting layer group (1) used in an electronic device, a display module, and an electronic device are provided. The supporting layer group (1) includes a soft layer (11) and a hard layer (12). The soft layer (11) and the hard layer (12) are stacked and connected in a thickness direction of the supporting layer group (1). A modulus of the soft layer (11) is 10 kPa to 800 kPa, and a modulus of the hard layer (12) is 10 GPa to 300 GPa. The supporting layer group (1) uses a two-layer structure, and a modulus a material of each layer is within the specified modulus range, so that a cushioning capacity of the two-layer stacked structure is optimal, to improve a cushioning capacity of the supporting layer group (1) and reduce a thickness of the stacked layers.

## Description

This application claims priority to Chinese Patent Application No. 202220192730.6, filed with the China National Intellectual Property Administration on January 24, 2022 and entitled "SUPPORTING LAYER GROUP USED IN ELECTRONIC DEVICE, DISPLAY MODULE, AND ELECTRONIC DEVICE", which is incorporated herein by reference in its entirety.

### TECHNICAL FIELD

This application relates to the field of electronic device technologies, and in particular, to a supporting layer group used in an electronic device, a display module, and an electronic device.

### BACKGROUND

Currently, most electronic devices use flexible displays. Compared with a liquid crystal display or a rigid display, impact resistance strength of a display touch layer of the flexible display is greatly reduced, and a risk of a fracture and failure caused by falling or being squeezed is greatly increased. A root cause of this is that a cushioning capacity of a supporting layer on a rear side of a display is insufficient. When a mobile phone falls, a middle frame step, an aperture, an adhesive, an edge of foam, and the like of the mobile phone have impact on the rear side of the display, causing breakage of the display touch layer and failures such as a broken pixel or a black spot. In a conventional technology, a supporting layer of a rear side of a display is composited by using a plurality of layers of materials, and therefore is relatively thick, and has an insufficient cushioning capacity.

### SUMMARY

This application provides a supporting layer group used in an electronic device, a display module, and an electronic device, and is intended to improve a cushioning capacity of the supporting layer group.

According to a first aspect, an embodiment of this application provides a supporting layer group used in an electronic device, where the supporting layer group includes a soft layer and a hard layer, and the soft layer and the hard layer are stacked and connected in a thickness direction of the supporting layer group.

A modulus of the soft layer is 10 kPa to 800 kPa, and a modulus of the hard layer is 10 GPa to 300 GPa. The supporting layer group has two layers, to reduce a thickness of the supporting layer group and a weight of the supporting layer group. In addition, a modulus of a material used for the soft layer is 10 kPa to 800 kPa, and a modulus of a material used for the hard layer is 10 GPa to 300 GPa, so that the soft layer and the hard layer meet the foregoing specified modulus range, to improve cushioning effect of the supporting layer group.

A thickness of the soft layer is 50 µm to 250 µm, for example, 50 µm, 100 µm, 150 µm, 200 µm, or 250 µm, and a thickness of the hard layer is 15 µm to 100 µm, for example, 30 µm, 45 µm, 60 µm, 75 µm, or 90 µm.

If the thickness of the soft layer is excessively small (for example, less than 50 µm), a capability of the soft layer to absorb internal impact is reduced, and consequently a cushioning capacity of the supporting layer group is relatively low. If the thickness of the soft layer is excessively large (for example, greater than 250 µm), the supporting layer group is relatively thick, which is not conducive to thickness reduction of the electronic device.

If the thickness of the hard layer is excessively small (for example, less than 15 µm), the hard layer is not hard enough to support the internal impact and squeezing, and consequently, an anti-stamping capability of the supporting layer group is relatively low. If the thickness of the hard layer is excessively large (for example, greater than 100 µm), the supporting layer group is relatively thick, which is not conducive to weight reduction of the electronic device.

The soft layer has adhesiveness, and the soft layer is bonded to the hard layer. The soft layer is connected to a display touch layer and the hard layer by using the adhesiveness of the soft layer, and there is no need to use another adhesive layer, so that the soft layer has cushioning effect and the thickness is reduced.

A peeling force of the soft layer is 500 gf/inch to 2000 gf/inch, so that the soft layer is closely connected to the hard layer and the display touch layer.

The soft layer is a single layer, and a material of the soft layer includes one or more of acrylic adhesive, silica gel, and gel.

The soft layer is a composite layer, an overall modulus range of the soft layer meets a range from 10 kPa to 800 kPa, an overall peeling force of the soft layer meets a range from 500 gf/inch to 2000 gf/inch, and the soft layer includes a first adhesive tape, a cushion tape, and a second adhesive tape that are disposed in a stacked manner. The cushion tape provides a cushioning function of a main body, the first adhesive tape provides a peeling force to a display touchscreen, and the second adhesive tape provides a peeling force to the hard layer.

A material of the first adhesive tape and a material of the second adhesive tape are one or more of polyethylene terephthalate, thermoplastic polyurethane elastomer, and silica gel; and
a material of the cushion tape is polydimethylsiloxane or polyurethane foam.

The first adhesive tape, the cushion tape, and the second adhesive tape are composited by coating or hot pressing.

An elongation at break of the hard layer is 0.2% to 10%. When the hard layer is affected by an external force, the elongation at break that is 0.2% to 10% and that is of an original size of the hard layer can be met.

The hard layer is a single layer, and a material of the hard layer includes one or more of electrodeposited copper, rolled annealed copper, copper foil, stainless steel, aluminum, steel, an aluminum-steel composite, carbon fiber, and glass fiber.

The hard layer is a composite layer, an overall modulus range of the hard layer meets a range from 10 GPa to 300 GPa, and the hard layer includes first metal and second metal that are disposed in a stacked manner.

A material of the first metal is aluminum, and a material of the second metal is copper. A thickness of the aluminum may be set to 30 µm to 50 µm. The aluminum is used to provide strength of a main body and to provide a function of weight reduction. A thickness of the copper may be set to 5 µm to 10 µm. The copper is used to provide a function of heat dissipation.

The first metal and the second metal are composited by using a rolling process or an electroplating process.

The supporting layer group is used for a flexible display.

The flexible display includes a cover plate, an optically clear adhesive, a polarizer, and a light-emitting panel that are sequentially stacked, and the supporting layer group is connected to the light-emitting panel.

According to a second aspect, an embodiment of this application provides a display module, where the display module includes:
a display touch layer; and
a supporting layer group, where the supporting layer group is the foregoing supporting layer group.

The supporting layer group includes a soft layer and a hard layer that are disposed in a stacked manner, and the soft layer is attached to the display touch layer. The soft layer is disposed between the display touch layer and the hard layer, to prevent, to a greatest extent, direct contact between the hard layer and the display touch layer, and reduce a risk that the hard layer has impact on the display touch layer influenced by an external force.

According to a third aspect, an embodiment of this application provides an electronic device, where the electronic device includes:
a housing; and
a display module, where the display module is connected to the housing, and the display module is the foregoing display module. A supporting layer group is connected to an inner side of the display touch layer, and the supporting layer group is configured to protect the display touch layer. When an electronic device is dropped or squeezed, the supporting layer group is configured to resist impact of an internal component of the electronic device on the display touch layer, and prevent, to a greatest extent, occurrence of a broken pixel, a black spot, or the like on the display touch layer due to the internal impact, to improve an impact resistance capability of the display touch layer, thereby prolonging a service life of the display module and that of the electronic device.

It should be understood that the foregoing general descriptions and the following detailed descriptions are merely examples, and are not intended to limit this application.

### BRIEF DESCRIPTION OF DRAWINGS

FIG. 1 is a schematic diagram of a conventional supporting layer;
FIG. 2 is a schematic diagram of a supporting layer group according to a specific embodiment of this application; and
FIG. 3 is a schematic diagram of a supporting layer group according to another specific embodiment of this application.

### Reference numerals:

11': polyimide; 12': pressure-sensitive adhesive/grid adhesive; 13': foam; 14': metal;
1: supporting layer group; 11: soft layer; 111: first adhesive tape; 112: cushion tape; 113: second adhesive tape; 12: hard layer; 121: first metal; 122: second metal;
2: display touch layer; 21: cover plate; 22: optically clear adhesive; 23: polarizer; 24: light-emitting panel;
Z: thickness direction.

The accompanying drawings herein are incorporated into this specification and constitute a part of this specification, show embodiments conforming to this application, and are used, together with this specification, to explain the principle of this application.

### DESCRIPTION OF EMBODIMENTS

To better understand the technical solutions of this application, the following describes embodiments of this application in detail with reference to the accompanying drawings.

Terms used in embodiments of this application are merely intended to describe specific embodiments, but are not intended to limit this application. The terms "a", "the", and "this" of singular forms used in embodiments and the appended claims of this application are also intended to include plural forms, unless otherwise specified in the context clearly.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be noted that orientation words such as "above", "below", "left", and "right" described in embodiments of this application are described from perspectives shown in the accompanying drawings, and should not be construed as a limitation on embodiments of this application. In addition, in the context, it should be further understood that, when it is mentioned that one element is connected "above" or "below" another element, the element can be directly connected "above" or "below" the another element, or may be indirectly connected "above" or "below" the another element through an intermediate element.

A display module is configured to display an image, a video, and the like. To protect a display touch layer in a display module of an electronic device and improve a capability of the display touch layer to resist internal impact, a common practice is to dispose a supporting layer below the display touch layer.

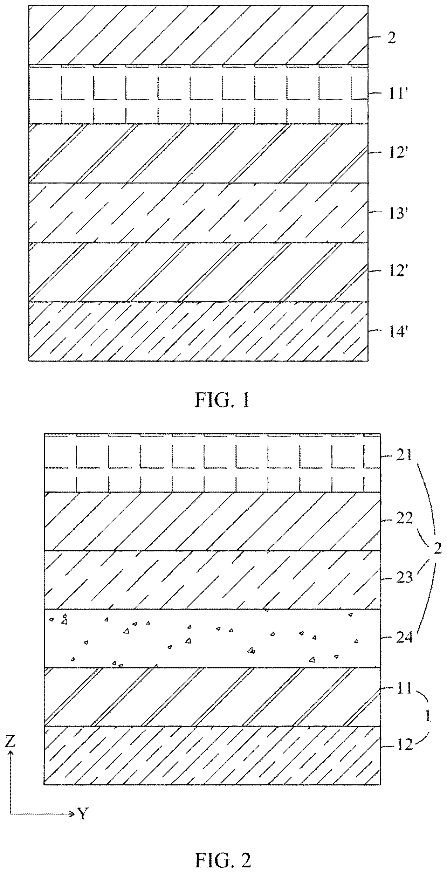

As shown in FIG. 1, a conventional supporting layer is composited by using a plurality of layers of materials such as foam 13', polyimide 11', and metal 14' (copper), and interface bonding is performed by using an adhesive. Impact is resisted by using rigidity of the metal 14' (copper), to reduce pressure, and dynamic impact is cushioned by using the foam 13', to absorb impact energy. However, because the supporting layer is composited by using the plurality of layers of materials, the supporting layer is relatively thick, which is not conducive to lightening and thickness reduction of the electronic device. If the thickness of the supporting layer is reduced, a cushioning capacity of the supporting layer is reduced.

In addition, there is a supporting layer composited by using a plurality of layers of metal, a pressure-sensitive adhesive is used to bond the layers of metal, and no other polymer cushion materials are used. Impact and squeezing are resisted completely by using hardness of the metal. However, impact is resisted completely by using rigidity of the metal, and there is no cushion material that absorbs the energy. As a result, the cushioning capacity of the supporting layer is insufficient. In addition, after the plurality of layers of metal are stacked, rigidity of the supporting layer is excessively high, causing inconvenience of bending. After bending, a bounce force is greatly high. Therefore, the supporting layer cannot be used for a curved mobile phone. In addition, the metal is relatively heavy, which is not conducive to weight reduction of the electronic device.

To resolve the foregoing technical problems, an embodiment of this application provides an electronic device. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device may include components such as a housing and a display module. The display module is connected to the housing, and the display module is configured to display an image, a video, and the like. The display module is a flexible OLED display module (flexible display). In some embodiments, the electronic device may include one or N display modules, where N is a positive integer greater than 1.

As shown in FIG. 2, a flexible OLED display module in an embodiment of this application includes a display touch layer 2 and a supporting layer group 1. The supporting layer group 1 is connected to an inner side of the display touch layer 2, and the supporting layer group 1 is configured to protect the display touch layer 2. Specifically, the display touch layer 2 includes a cover plate 21, an optically clear adhesive 22, a polarizer 23, and a light-emitting panel 24 that are sequentially stacked, and the supporting layer group 1 is bonded to the light-emitting panel 24. When an electronic device is dropped or squeezed, the supporting layer group 1 is configured to resist impact of an internal component of the electronic device on the display touch layer 2, and prevent, to a greatest extent, occurrence of a broken pixel, a black spot, or the like on the display touch layer 2 due to the internal impact, to improve an impact resistance capability of the display touch layer 2, thereby prolonging a service life of the display module and that of the electronic device.

Specifically, as shown in FIG. 2, the supporting layer group 1 includes a soft layer 11 and a hard layer 12. The soft layer 11 and the hard layer 12 are stacked and connected in a thickness direction Z of the supporting layer group 1, and one end that is of the soft layer 11 and that is away from the hard layer 12 is connected to the display touch layer 2. A modulus of the soft layer 11 is 10 kPa to 800 kPa, and a modulus of the hard layer 12 is 10 GPa to 300 GPa.

In this embodiment of this application, the supporting layer group 1 has two layers, to reduce a thickness of the supporting layer group 1 and a weight of the supporting layer group 1. In addition, a modulus of a material used for the soft layer 11 is 10 kPa to 800 kPa, and a modulus of a material used for the hard layer 12 is 10 GPa to 300 GPa, so that the soft layer 11 and the hard layer 12 meet the foregoing specified modulus range, to improve cushioning effect of the supporting layer group 1. With a same thickness, a cushioning capacity of materials whose moduli are within the foregoing ranges and that are used for the soft layer 11 and the hard layer 12 is stronger than a cushioning capacity of materials whose moduli are not within the foregoing ranges and that are used for the soft layer 11 and the hard layer 12. In this embodiment, the supporting layer group 1 uses a two-layer structure, and a material of each layer is within the specified modulus range, so that a cushioning capacity of the two-layer stacked structure is optimal, to improve the cushioning capacity of the supporting layer group 1 and reduce a thickness of the stacked layers.

Therefore, in this embodiment, as shown in the following chart, nine groups of stacked structures are set to verify a cushioning capacity of each group of structure. Each group of experiment parameters is the same. Details are not described herein again.

| Stack | Soft-hard | Soft-hard | Soft-soft-hard | Soft-soft-hard-hard | Soft-hard-soft | Soft-hard-soft | Hard-soft-hard | Hard-soft-hard | Hard-soft-soft-hard |
|---|---|---|---|---|---|---|---|---|---|
| Panel (light-emitting panel) | | | | | | | | | |
| Stack 1/modulus | EMBO/ kPa | / | EMBO/ kPa | EMBO/ kPa | / | / | SUS/ GPa | SUS/GPa | PET/GPa |
| Stack 2/modulus | / | Foam/ MPa | Foam/ MPa | Foam/ MPa | Foam/ MPa | Foam/ MPa | Foam/ MPa | / | EMBO/kPa |
| Stack 3/modulus | / | / | / | PET/G Pa | SUS/ GPa | PET/G Pa | / | OCA/GPa | Foam/MPa |
| Stack 4/modulus | Cu/GPa | Cu/GPa | Cu/GPa | Cu/GPa | Foam/ MPa | Foam/ MPa | SUS/ GPa | SUS/GPa | Cu/GPa |
| Ball drop height/mm | 36 | 34 | 32 | 31 | 20 | 30 | 24 | 12 | 28 |
| Conclusion | An impact resistance capability of the stack in a soft-hard sequence is significantly better than that of the stack in a soft-hard-soft sequence and that of the stack in a hard-soft-hard sequence. In addition, in the soft-hard combination, kPa+GPa is better than MPa+GPa. | | | | | | | | |
| | To be specific, when the material of each layer is determined, an optimal | | | | | | | | |

| Stack | Soft-hard | Soft-hard | Soft-soft-hard | Soft-soft-hard-hard | Soft-hard-soft | Soft-hard-soft | Hard-soft-hard | Hard-soft-hard | Hard-soft-soft-hard |
|---|---|---|---|---|---|---|---|---|---|
| | cushioning condition is a combination of kPa and GPa whose moduli are matched. | | | | | | | | |

In this chart, GPa, MPa, and kPa are unit moduli, where 1 GPa=1000 MPa=1000000 kPa. EMBO is a grid adhesive, Foam is foam, OCA is an optically clear adhesive, Cu is copper, PET is polyethylene terephthalate, and SUS is stainless steel. The ball drop height is a height that can be reached in a ball drop experiment. (The ball drop experiment is that a test product is placed on an experimental tabletop, a steel ball with a specified weight experiences free fall from a specified falling height to the test product to have impact on the test product, and aspects of performance such as appearance of the product are checked.)

It can be learned from the foregoing experimental data that a cushioning capacity of the two-layer stacked structure of the soft layer and the hard layer is better than that of the stacks of soft-soft-hard, soft-soft-hard-hard, soft-hard-soft, hard-soft-hard, and hard-soft-soft-hard structures. In addition, in the two stacks of soft-hard structures, the combination of kPa (soft) and GPa (hard) is better than the combination of MPa (soft) and GPa (hard), and implements a strongest cushioning capacity of the material of each layer within the specified modulus range. Further, a thickness of the soft layer 11 is 50 µm to 250 µm, for example, 50 µm, 100 µm, 150 µm, 200 µm, or 250 µm, and a thickness of the hard layer 12 is 15 µm to 100 µm, for example, 30 µm, 45 µm, 60 µm, 75 µm, or 90 µm.

If the thickness of the soft layer 11 is excessively small (for example, less than 50 µm), a capability of the soft layer 11 to absorb internal impact is reduced, and consequently the cushioning capacity of the supporting layer group 1 is relatively low. If the thickness of the soft layer 11 is excessively large (for example, greater than 250 µm), the supporting layer group 1 is relatively thick, which is not conducive to thickness reduction of the electronic device.

If the thickness of the hard layer 12 is excessively small (for example, less than 15 µm), the hard layer 12 is not hard enough to support the internal impact and squeezing, and consequently, an anti-stamping capability of the supporting layer group 1 is relatively low. If the thickness of the hard layer 12 is excessively large (for example, greater than 100 µm), the supporting layer group 1 is relatively thick, which is not conducive to weight reduction of the electronic device.

Specifically, the thickness of the supporting layer group 1 may be set to a range of 65 µm to 200 µm, for example, 100 µm, 150 µm, or 200 µm.

In a possible design, as shown in FIG. 2, the soft layer 11 and the hard layer 12 are disposed as single-layer structures, the soft layer 11 has adhesiveness, the soft layer 11 is bonded to the display touch layer 2, and the soft layer 11 is bonded to the hard layer 12. In this embodiment, the soft layer 11 is connected to the display touch layer 2 and the hard layer 12 by using the adhesiveness of the soft layer 11, and there is no need to use another adhesive layer, so that the soft layer 11 has cushioning effect and the thickness is reduced. A peeling force of the soft layer 11 is 500 gf/inch to 2000 gf/inch, so that the soft layer 11 is closely connected to the hard layer 12 and the display touch layer 2, and reliability of the connection between the display touch layer 2 and the supporting layer group 1 is improved. An elongation at break of the hard layer 12 is 0.2% to 10%. To be specific, the hard layer 12 extends to a specific extent when resisting impact, and does not immediately break. In this embodiment, when the hard layer 12 is affected by an external force, the elongation at break that is 0.2% to 10% and that is of an original size of the hard layer 12 can be met.

Further, the soft layer 11 and the hard layer 12 may be of the single-layer structures. The material of the soft layer 11 includes one or more of acrylic adhesive, silica gel, and gel. The material of the hard layer 12 includes one or more of electrodeposited copper, rolled annealed copper, copper foil, stainless steel, aluminum, steel, an aluminum-steel composite, carbon fiber, and glass fiber.

In a specific embodiment, solution 1 in the following table indicates a supporting layer in general. As shown in FIG. 1, the supporting layer includes polyimide 11', a pressure-sensitive adhesive/grid adhesive 12', foam 13', the pressure-sensitive adhesive/grid adhesive 12', and metal 14' (copper). Solution 2 in the following table indicates the supporting layer group 1 in this application. As shown in FIG. 2, the soft layer 11 uses silicone gel, and the hard layer 12 uses copper foil. A peeling force of the silicone gel is 1400 gf/inch, and an energy storage modulus of the silicone gel is 100 kPa (30 C). A modulus of the copper foil is 55 GPa, and yield strength of the copper foil is 400 MPa.

It should be noted that experimental parameters in solution 1 and solution 2 are the same. Details are not described herein again.

| Technical Solution | Thickness/mm | Ball drop height/mm | Sharp impact/mm | Indentation/g |
|---|---|---|---|---|
| Solution 1 | 0.26 | 61 | 22 | 60 |
| Solution 2 | 0.185 | 88 | 27 | 124 |

The ball drop height in the foregoing table is a height that can be reached in the ball drop experiment. (The ball drop experiment is that a test product is placed on an experimental tabletop, a steel ball with a specified weight experiences free fall from a specified falling height to the test product to have impact on the test product, and aspects of performance such as appearance of the product are checked.) Similarly, the sharp impact is the height that can be reached in a sharp impact experiment. The indentation is a capability of the product to resist the external impact.

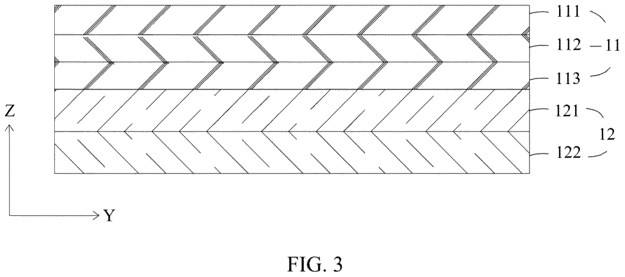

It can be known from the experiment in the foregoing table that the thickness in solution 1 is 0.26 mm, the thickness in solution 2 is 0.185 mm, the ball drop height that can be reached in solution 1 is 61 mm, the ball drop height that can be reached in solution 2 is 88 mm, the sharp impact that can be reached in solution 1 is 22 mm, the sharp impact that can be reached in solution 2 is 27 mm, the indentation that can be met in solution 1 is 60 g, and the indentation that can be met in solution 2 is 124 g. Therefore, compared with the supporting layer in general, the supporting layer group 1 in this application has a smaller thickness and better cushioning effect. In another possible design, as shown in FIG. 3, the soft layer 11 and the hard layer 12 may alternatively be composite layers. However, an overall modulus range of the soft layer 11 meets a range from 10 kPa to 800 kPa, an overall peeling force of the soft layer 11 meets a range from 500 gf/inch to 2000 gf/inch, and an overall modulus range of the hard layer 12 meets a range from 10 GPa to 300 GPa. In this way, optimal cushioning effect is implemented after the soft layer 11 and the hard layer 12 are stacked and connected.

Further, the soft layer 11 includes a first adhesive tape 111, a cushion tape 112, and a second adhesive tape 113 that are disposed in a stacked manner. The cushion tape 112 provides a cushioning function of a main body, the first adhesive tape 111 provides a peeling force to a display touchscreen, and the second adhesive tape 113 provides a peeling force to the hard layer 12.

A material of the first adhesive tape 111 and a material of the second adhesive tape 113 are one or more of polyethylene terephthalate, thermoplastic polyurethane elastomer, and silica gel. A material of the cushion tape 112 is polydimethylsiloxane or polyurethane foam. The first adhesive tape 111, the cushion tape 112, and the second adhesive tape 113 may be combined by using a coating process or composited by using a hot pressing manner.

The hard layer 12 includes first metal 121 and second metal 122 that are disposed in a stacked manner. A material of the first metal 121 is aluminum, and a thickness of the first metal 121 may be set to 30 µm to 50 µm. The aluminum is used to provide strength of a main body and to provide a function of weight reduction. A material of the second metal 122 is copper, and a thickness of the second metal 122 may be set to 5 µm to 10 µm. The copper is used to provide a function of heat dissipation. The first metal 121 and the second metal 122 are composited by using a rolling process or an electroplating process.

Alternatively, the soft layer 11 is disposed as a single layer, and the hard layer 12 is disposed as a composite layer. Alternatively, the soft layer 11 is disposed as a composite layer, and the hard layer is disposed as a single layer. This is not limited in this application.

The foregoing descriptions are merely preferred embodiments of this application, and are not intended to limit this application. For a person skilled in the art, various modifications and changes may be made in this application. Any modification, equivalent replacement, improvement, or the like made without departing from the spirit and principle of this application shall fall within the protection scope of this application.

## Claims

1. A supporting layer group used in an electronic device, wherein the supporting layer group (1) comprises a soft layer (11) and a hard layer (12), and the soft layer (11) and the hard layer (12) are stacked and connected in a thickness direction of the supporting layer group (1); and
a modulus of the soft layer (11) is 10 kPa to 800 kPa, and a modulus of the hard layer (12) is 10 GPa to 300 GPa.

2. The supporting layer group used in the electronic device according to claim 1, wherein a thickness of the soft layer (11) is 50 µm to 250 µm, and a thickness of the hard layer (12) is 15 µm to 100 µm.

3. The supporting layer group used in the electronic device according to claim 1, wherein the soft layer (11) has adhesiveness, and the soft layer (11) is bonded to the hard layer (12).

4. The supporting layer group used in the electronic device according to claim 3, wherein a peeling force of the soft layer (11) is 500 gf/inch to 2000 gf/inch.

5. The supporting layer group used in the electronic device according to claim 1 or 3, wherein the soft layer (11) is a single layer, and a material of the soft layer (11) comprises one or more of acrylic adhesive, silica gel, and gel.

6. The supporting layer group used in the electronic device according to claim 1, wherein the soft layer (11) is a composite layer, and the soft layer (11) comprises a first adhesive tape (111), a cushion tape (112), and a second adhesive tape (113) that are disposed in a stacked manner.

7. The supporting layer group used in the electronic device according to claim 6, wherein a material of the first adhesive tape (111) and a material of the second adhesive tape (113) are one or more of polyethylene terephthalate, thermoplastic polyurethane elastomer, and silica gel; and
a material of the cushion tape (112) is polydimethylsiloxane or polyurethane foam.

8. The supporting layer group used in the electronic device according to claim 6, wherein the first adhesive tape (111), the cushion tape (112), and the second adhesive tape (113) are composited by coating or hot pressing.

9. The supporting layer group used in the electronic device according to claim 1, wherein an elongation at break of the hard layer (12) is 0.2% to 10%.

10. The supporting layer group used in the electronic device according to claim 1, wherein the hard layer (12) is a single layer, and a material of the hard layer (12) comprises one or more of electrodeposited copper, rolled annealed copper, copper foil, stainless steel, aluminum, steel, an aluminum-steel composite, carbon fiber, and glass fiber.

11. The supporting layer group used in the electronic device according to claim 1, wherein the hard layer (12) is a composite layer, and the hard layer (12) comprises first metal (121) and second metal (122) that are disposed in a stacked manner.

12. The supporting layer group used in the electronic device according to claim 11, wherein a material of the first metal (121) is aluminum, and a material of the second metal (122) is copper.

13. The supporting layer group used in the electronic device according to claim 11, wherein the first metal (121) and the second metal (122) are composited by using a rolling process or an electroplating process.

14. The supporting layer group used in the electronic device according to claim 1, wherein the supporting layer group is used for a flexible display, wherein
the flexible display comprises a cover plate, an optically clear adhesive, a polarizer, and a light-emitting panel that are sequentially stacked, and the supporting layer group is connected to the light-emitting panel.

15. A display module, wherein the display module comprises:
a display touch layer (2); and
a supporting layer group (1), wherein the supporting layer group (1) is the supporting layer group (1) according to any one of claims 1 to 14, wherein
the supporting layer group (1) comprises a soft layer (11) and a hard layer (12) that are disposed in a stacked manner, and the soft layer (11) is attached to the display touch layer (2).

16. An electronic device, wherein the electronic device comprises:
a housing; and
a display module, wherein the display module is connected to the housing, and the display module is the display module according to claim 15.
